# EUROPEAN PATENT SPECIFICATION

(11) **EP 0 974 883 B1**
(45) Date of publication and mention of the grant of the patent: **11.09.2002**
(21) Application number: 99119668.4
(22) Date of filing: 22.04.1997
(51) Int. Cl.: G05B 19/416

(54) **Methods and apparatus for grinding concentric cylindrical workpiece regions**
Verfahren und Vorrichtung zum konzentrischen Schleifen von zylindrischen Werkstückbereichen
Méthode et dispositif pour meuler concentriquement les parties cylindriques d'une pièce

(30) Priority: 23.04.1996 GB 9608352
(43) Date of publication of application: 26.01.2000
(62) Divisional of application: 97919519.5
(73) Proprietor: Unova U.K. Limited, Aylesbury, Buckinghamshire HP20 2RQ (GB)
(72) Inventor: Clewes, Stuart, Keighley West Yorkshire BD22 7QX (GB); Pickles, John David "Lambert Close", North Yorkshire BD23 5PN (GB)
(74) Representative: Nash, Keith Wilfrid

(56) References cited:
- EP-A- 0 276 802
- EP-A- 0 282 776
- DE-A- 2 918 249

## Description

### Field of invention

This invention concerns the grinding of cylindrical sections of workpieces which should be concentric in rotation, such as the journal bearing regions of a crankshaft.

### Background to the invention

During cylindrical grinding, a workpiece is rotated about its primary axis and the or each cylindrical section of the crankshaft is ground in a conventional way by moving a grinding wheel into a grinding position so as to remove material from the workpiece and produce a cylindrical region thereon.

During the grinding operation, unwanted eccentricity may be introduced into such a cylindrical region due to distortion introduced during the grinding step, so-called runout, and as a consequence of stress relieving the workpiece. Any eccentricity introduced into such journal bearing regions of a crankshaft, introduces undesirable wear in the component in use, such as when it rotates in an engine.

It is an object of the present invention provide a method of setting up a grinding machine, and grinding methods, and machines to reduce unwanted eccentricity in supposedly concentric cylindrical regions of ground workpieces.

EP 0276802 discloses a method of grinding a plurality of cams on a camshaft, wherein the angle and length of travel of the grinding wheel are adjusted in response to the polar coordinates of the nominal cam contour, any deviation from the nominal process value is measured, and the length of travel of the grinding wheel is adjusted by a correction factor. However, the problem of stress relief after grinding is not considered.

### Summary of the invention

According to one aspect of the present invention, there is provided a method of operating a computer controlled grinding machine to grind a region of a workpiece, whereby the finished workpiece should have a cylindrical ground surface region which is concentric relative to the workpiece primary axis, said method comprising the step of eccentrically grinding the said region of the workpiece, the degree of eccentricity imparted being such that, when the ground workpiece is stress relieved after grinding, the ground surface region will be concentric relative to the said primary axis.

According to another aspect of the invention, there is provided a method of grinding cylindrical surfaces of a crankshaft, whereby the said cylindrical ground surfaces of the finished crankshaft should be concentric relative to their axes, said method comprising the steps of:
- using a software controlled crankpin following facility incorporated into a computer controlled grinding machine to enable a grinding wheel to follow the relatively excessive eccentric movement of a crankpin during grinding as the crankshaft rotates, and
- eccentrically grinding the cylindrical surfaces of the crankshaft, the degree of eccentricity imparted being such that, when the ground crankshaft is stress relieved after grinding, the ground cylindrical surfaces will be concentric relative to their axes.

### Application to elongate workpieces

Where a plurality of such regions are to be ground at spaced apart positions axially along an elongate workpiece which is supported at opposite ends, the setting up process measurements may be performed on a concentric cylindrical region approximately midway along the said axial length of the workpiece, and proportionately reduced corrections are applied to the wheelfeed programme instructions or control signals for similar regions to be ground which are displaced from the mid position towards the supported ends of the workpiece.

Alternatively and preferably in a method of setting up a computer controlled grinding machine to machine workpieces in which unwanted eccentricity introduced by the grinding process forces can vary in extent along the axial length thereof (as measured with reference to its supported ends), such that regions towards the centre of the workpiece require a greater degree of eccentricity compensation during grinding as opposed to those adjacent the ends thereof, the method involves the steps of cylindrically grinding all of the cylindrical surfaces of a workpiece which are to be concentric with the primary workpiece axis without introducing any compensation for unwanted eccentricity introduced by the grinding process forces, thereafter making measurements on the workpiece to determine any unwanted eccentricity and the angular position thereof about the primary workpiece axis of rotation for each of the ground regions, and separately adjusting each of the wheelfeed programme instructions or control signals to be used to control the wheelfeed during the subsequent grinding of the or another such workpiece, at each of the corresponding said regions thereof, so as to compensate individually for any process-induced eccentricity in each said region.

### Checking on the corrections

After a setting up process has been performed and the original workpiece has been reground using the corrected wheelfeed programme instructions or control signals, a further check on the reground workpiece may be made, and second order corrections may be made to the wheelfeed programme instructions or control signals, before grinding further workpieces.

Measurements may be made subsequent to each further workpiece grinding to determine whether the corrections made from earlier measurements sufficiently compensate for any unwanted process induced eccentricity, and further corrections may be made to the wheelfeed programme instructions or control signals as required. The process may be repeated until the measurements made on a test workpiece indicate that the unwanted eccentricity of each ground region is within desired limits. Thereafter the grinding machine wheelfeed may be controlled to grind further workpieces in accordance with the finally modified set of wheelfeed programme instructions or control signals.

### Multiple workpiece measuring for setting up

Instead of producing only one workpiece on which measurements are made during setting up, it may be preferable at each stage to grind a number of workpieces which together form a sample, and to perform eccentricity measurements on the workpieces in each sample, and thereby determine the extent of any unwanted eccentricity both in terms of angular position and radial extent for each region of each workpiece in each sample, and to determine the mean unwanted eccentricity and mean angular position of such eccentricity for each sample, for use as the basis for the correction to the wheelfeed programme instructions or control signals.

Where samples containing two or more workpieces are used to determine the corrections to be made, the process for determining what is to be the final set of programme instructions or control signals for the wheelfeed, can be terminated either if all of the measurements of unwanted eccentricity in all of the workpieces in a sample fall within desired limits, or if the mean of all the measurements of unwanted eccentricity fall within desired limits. The particular criterion used may depend upon the specification for the component concerned.

Described herein is a method of grinding concentric cylindrical regions of similar workpieces comprising the steps of setting up modified wheelfeed programme instructions or control signals in any of the aforesaid ways, and thereafter grinding cylindrical surfaces of workpieces similar to that used in the setting up process, using the modified wheelfeed programme instructions or control signals derived from the setting up procedure, to control the wheelfeed drive.

By using a high speed CBN grinding wheel, it is possible to eliminate the rough machining step typically required before a fine grinding step to produce a bearing surface, thereby allowing a two stage grinding and polishing process to produce a finished product, instead of a three stage process.

The invention thus allows the known software controlled crankpin following facility incorporated into computer controlled grinding machines to permit a grinding wheel to follow the relatively excessive eccentric movement of a crankpin during grinding as the crankshaft rotates, to be utilised, albeit acting at a smaller scale, to compensate for unwanted eccentricity introduced into cylindrically ground surfaces of a workpiece which should be concentric as a consequence of grinding process forces exerted as such surfaces are ground, which unwanted eccentricity tends to appear after the workpiece is stress relieved.

The invention thus in effect provides for eccentrically grinding regions of workpieces which are to have concentric cylindrical surfaces relative to the workpiece primary axis rather than concentrically grinding such regions, the degree of eccentricity being such that when a ground workpiece is stress relieved after grinding, the regions in fact will be concentric relative to the primary axis of the workpiece.

The invention is of particular application to the grinding of journal bearing regions on crankshafts, but it is to be understood that the invention is equally applicable to the grinding of any cylindrical concentric workpiece section so as to remove eccentricity which the grinding process can introduce into the workpiece, and which becomes evident as the latter becomes unstressed.

### Apparatus embodying the invention

A computer controlled grinding machine for performing methods of grinding as aforesaid comprises a grinding wheel, drive means for rotating the wheel, wheelfeed drive means for advancing and withdrawing the grinding wheel towards and away from a workpiece region in a precise manner, computer means for controlling the wheelfeed drive means, which computer means includes first memory means for storing programmable wheelfeed instructions whereby the position of the wheel at each instant during a grinding process can be controlled, program means loaded into the computer to control advance and withdrawal and position of the grinding wheel, and second memory means for storing correction signals for adjusting the original wheelfeed instructions or control signals derived therefrom during the grinding of said regions, or storing said corrected wheelfeed program instructions or control signals.

The invention also lies in the above defined machine when programmed to operate a grinding process which will reduce unwanted eccentricity introduced by grinding process forces into what should be a concentric cylindrical workpiece region, by grinding each such region so as to be complementarily eccentric to any eccentricity which would be introduced by grinding process forces.

Preferably, in such a machine in which the grinding wheel is to be moved axially relative to the workpiece (or the workpiece is to be moved axially relative to the grinding wheel) to allow different regions to be ground, the computer means includes additional program instructions to control the movement of the wheel or the workpiece to effect said relative positioning.

### Product produced by the process

The invention also lies in workpieces when made in accordance with any of the aforesaid methods or using the aforesaid grinding machine.

The invention will now be described by way of example with reference to the accompanying drawings, in which:
Figure 1 illustrates a computer controlled grinding machine, fitted with an in process gauge;
Figure 2 is a side view of the gauge to an enlarged scale;
Figure 3 is a diagrammatic illustration of how a gauge is controlled and in turn controls the grinding cycle, via the machine controlling computer; and
Figures 4 is an example of the grinding process steps of one method according to the invention.

### Detailed description of the drawings

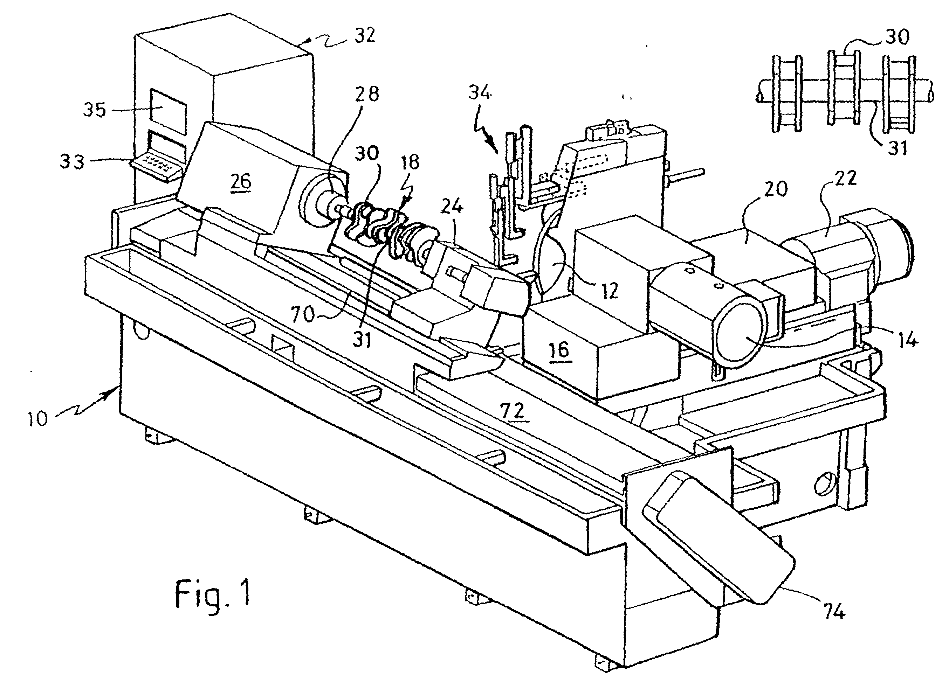

Figure 1 shows a grinding machine 10 having a grinding wheel 12 driven by a motor 14 and mounted on a wheelhead 16 for movement towards and away from a workpiece 18 along a linear track 20 under the control of the wheelfeed drive motor 22. The workpiece 18 is mounted on a carriage 70 itself slidable on a slideway 32 and driven thereby to position the workpiece relative to the wheel, via a drive 74. The workpiece is mounted between centres in a tailstock 24 and a headstock 26 (themselves mounted on the carriage 70). The headstock houses a motor (not shown) for rotating the workpiece 18 via a chuck 28. The workpiece shown is a crankshaft of an internal combustion engine and includes offset crankpins 30 (which are eccentric to the main crankshaft axis), and cylindrical bearing regions 31, which are to be ground to size, each bearing region constituting a cylindrical workpiece region for grinding which should be concentric with the workpiece axis.

A computer 32 loaded with workpiece data and operating programmes (such as are to be described) controls the operation of the machine and inter alia moves the wheelhead 16 towards and away from the workpiece 18 as the workpiece rotates, so as to maintain contact between the wheel and the journal bearing region being ground. Some data can be entered via the keyboard 33. Data/results/process steps can be displayed on the screen 35.

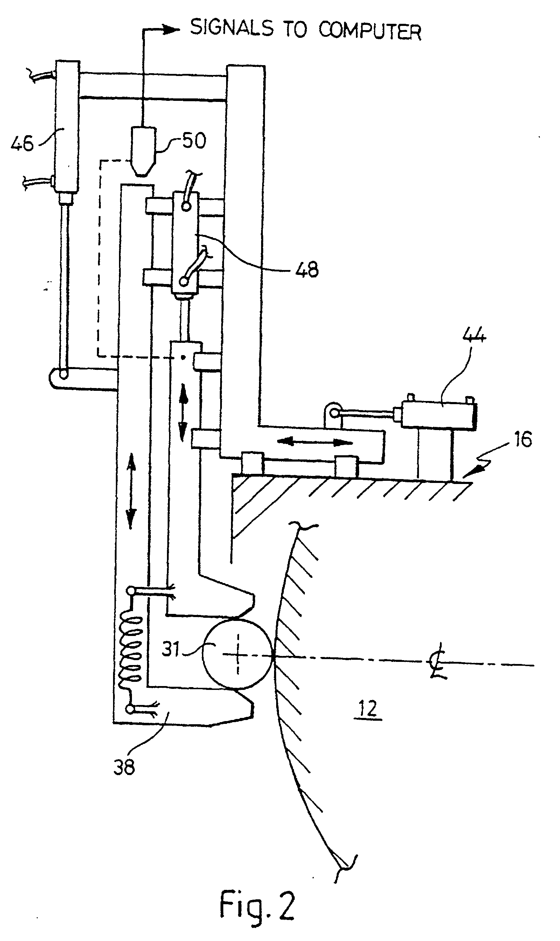

A gauge, generally designated 34, is carried by the wheel head assembly for gauging the diameter of the regions being ground. This can be done while the workpiece is rotated slowly, and preferably without the grinding wheel in contact, after grinding. The gauge is shown in its parked, non-operating position in Figure 1. During gauging it is advanced so that the fingers of the gauge (described in more detail with reference to Figure 2) are first located on the opposite side of the workpiece from the wheel 12, so that they can be lowered and moved back towards the wheel so as to be located above and below the workpiece, and then moved towards the latter until they touch it at diametrically opposite regions for gauging.

The gauge was designed to allow the gauging of crankpins as they are ground, and Figure 2 shows how the fingers 36 and 38 can engage a journal bearing region 31. The dotted outlines 40, 42 show the extreme positions of the pin relative to the wheel 12 as the pin is rotated around the axis of the crankshaft, and describes a vertical path as seen by the wheel 12. Pneumatic drives 44, 46 and 48 produce relative movement between the gauge assembly and the wheelhead 16, between the gauge assembly and the workpiece, and between the two fingers 36 and 38.

A sensor 50 determines the spacing between the fingers 36, 38 and provides a spacing signal for the computer 32, from which the diameter of the workpiece region between the fingers can be computed. The sensor can also provide a signal indicative of the linear oscillatory movement of the gauge finger 38 caused by any eccentricity in the ground region, by locking the two fingers 36, 38 so as to just lightly clamp the workpiece therebetween, and rotating the latter slowly and observing any movement of 38, relative to sensor 50.

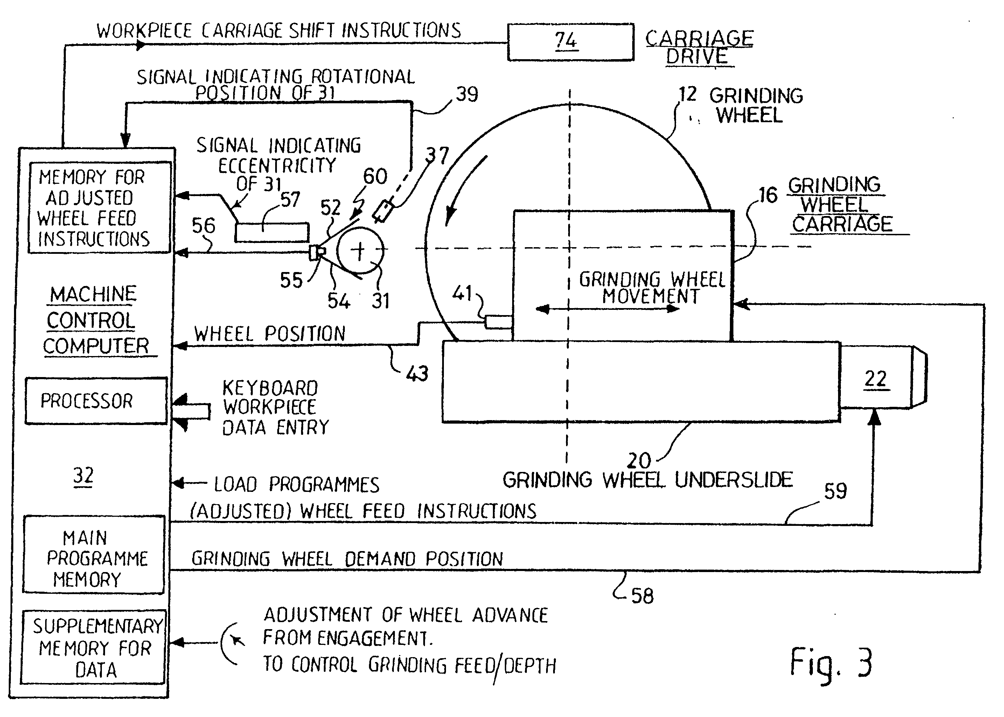

Figure 3 shows diagrammatically the grinding wheel 12, the wheelhead 16, the slide 20 and a different type of gauge from that shown in Figures 1 and 2. This engages a journal bearing workpiece region 31 by means of two fixed converging fingers 52, 54 with a sensor 55 for determining the distance between the converging fingers at which the fingers make contact with the workpiece. The computer 32 receives the gauging signals along line 56 and can compute therefrom the diameter of the workpiece region and delivers inter alia a position signal to the wheelhead drive via lines 58 + 59. Not shown are the signal paths from the computer 32 to the other drives for moving the gauge into and out of engagement and controlling the speed of rotation of the crankshaft. Although developed to measure crankpin diameters during grinding, this type of gauge can also be used to determine any eccentricity in the rotating workpiece region, by urging the gauge fingers 52, 54 into contact as shown and converting any in line movement of the gauge assembly 60, due to eccentricity, into an appropriate electrical signal using a transducer such as 57.

Wheel position signals from transducer encoder 41 are passed to the computer 32 via line 43.

As described in our copending UK Application 9702550.6 which describes a method of guiding crankpins to size using in process gauging, a technique is also described to obtain a high quality surface finish and highly accurate diameters of ground components. This technique may also be used when grinding journal bearing regions. Thus during grinding, an initial fast wheelfeed may be used to roundout- journal bearing region 31, and the fast grinding feed stopped after a fixed feed amount independent of the gauge. At the end of the fast feed the gauge 34 is used by the machine control computer to sample the size of the region 31 and to check any eccentricity in magnitude and angular position as determined by the rotated position of the workpiece at which the eccentricity is noted. A prerequisite for the grinding cycle to proceed beyond this point is that this sample of size sensibly confirms that the gauge is on the region and functioning properly.

After computing the necessary control signal to compensate for any measured eccentricity the grinding feed restarts. A lower feed rate may be used.

In normal operation the feed will be stopped in response to signals derived from the wheel position and/or the in-process gauge 34 in a diameter measuring mode, and sampled by the machine control computer 32.

In a method, which involves in process gauging as the grinding feed proceeds towards a target size, near final size the instantaneous size of the region 31 being ground can be continuously sampled by the machine control computer.

If one or two or more consecutive samples of region 31 size, are found to be at or below the target size, the controlling computer immediately stops the grinding feed and initiates a feed dwell. This dwell, measured as N workpiece turns, permits the region being ground to achieve good geometric roundness and a stable size. This procedure gives an optimum response to fast grinding feeds commensurate with fast manufacturing times. During this feed dwell, typically two work revolutions, the controlling computer stores a number of consecutive samples of size measured at different angular positions relative to the gauge fingers so that it can calculate an average value of the workpiece region diameter.

At the completion of this dwell, the average diameter value may be calculated, and this value used to calculate the feed distance to achieve the desired final size of the region. The controlling computer then initiates an incremental feed to final size. At the start of this incremental feed, the gauge, having completed its work, can be retracted, with the object of minimising manufacturing time. Because the feed to final size is not being controlled by gauge, it does not have to be slow but can be optimised to eliminate the build-up of machining vibrations and/or minimise machining time.

After a final "sparkout feed dwell", measured as n workpiece turns, the grinding wheel can be retracted, initially at a slow rate so as not to leave any grinding wheel breakaway mark, and then at a faster rate to minimise manufacturing time.

Alternatively, machining may be achieved without such in process gauging, simply by controlling the wheelfeed and gauging components off-line, and correcting for process induced eccentricity in accordance with the present invention and for wheel wear by appropriate adjustment as the grinding of a batch of workpieces progresses.

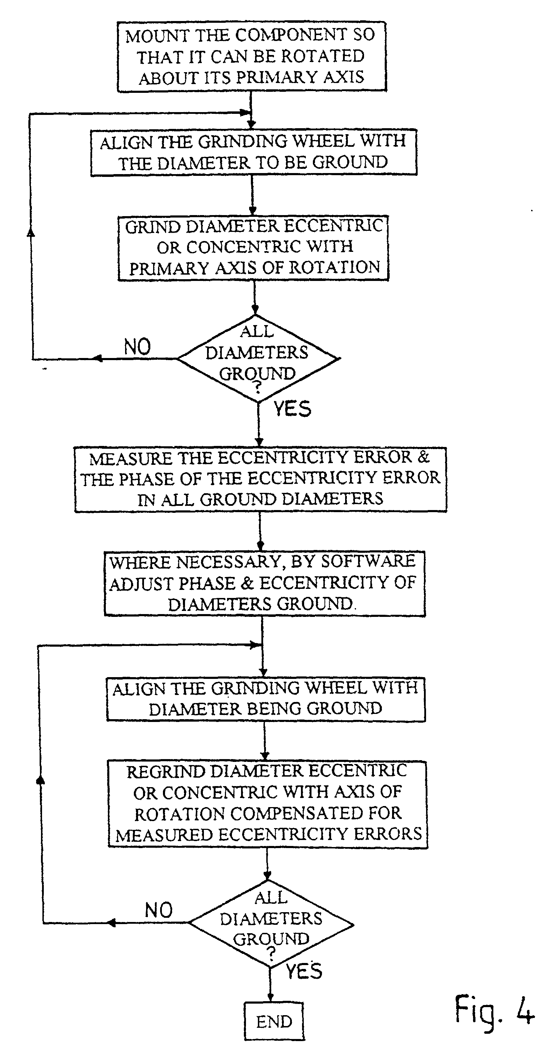

Figure 4 illustrates the steps of a method of grinding one component having a number of cylindrical surfaces which are to be ground concentric to the primary axis of the component. The same process is followed for each component to be ground.

Detailed programme steps required to set up and operate a grinding machine in different ways, in accordance with different aspects of the invention are now listed on the following pages.

The list of computer controlled operations which follow illustrate the steps which the machine controlling computer must initiate the inputs it must respond to and the decisions it must make, under the control of programmes loaded into its memory, so as to adjust the wheelfeed control signals and other machine parameters and parts so as to set up the machine to thereafter grind a journal bearing region of a crankshaft, in accordance with different methods embodying the invention, as detailed.

A brief explanation of the process to which the steps relate is provided at the head of each listing.

### Set-up routine/programmes

1. Routine for setting up a computer controlled grinding machine for grinding a workpiece having one region to be concentrically ground, and for subsequent grinding of similar workpieces
   1. Load workpiece data into machine computer
   2. Load wheelfeed programme for workpiece region
   3. Enter target wheel advance for region
   4. Mount workpiece
   5. Rotate workpiece about primary axis for grinding
   6. Align grinding wheel with region to be ground
   7. Initiate wheelfeed and advance wheel to engage region
   7 Grind workpiece and measure wheelhead advance
   9. Stop wheelfeed when desired wheel advance achieved
   10. Disengage wheel and workpiece
   11. Apply gauge to ground region
   12. Rotate workpiece slowly
   13. Gauge ground diameter and store diameter measurements.
   14. Identify any eccentricity and its rotational position
   15. Adjust wheelfeed programme for eccentricity
   16. Enter new target wheel advance
   17. Grind workpiece using adjusted wheelfeed programme
   18. Measure wheelhead advance
   19. Stop wheelfeed when required advance achieved
   20. Retract wheel
   21. Stop workpiece rotation
   22. Demount workpiece
   23. More similar workpieces? - Yes or No
   24. If Yes, go to 25, if No, go to 27
   25. Mount new workpiece
   26. Go to 16
   27. END

2. Similar routine where workpiece is to be removed for gauging
   1. Load workpiece data into machine computer
   2. Load wheelfeed programme for workpiece region
   3. Enter target wheel advance for region
   4. Mount workpiece
   5. Rotate workpiece about primary axis for grinding
   6. Align grinding wheel with region to be ground
   7. Initiate wheelfeed and advance wheel to engage region
   8. Grind workpiece and measure wheelhead advance
   9. Stop wheelfeed when desired wheel advance achieved
   10. Disengage wheel and workpiece
   11. Stop workpiece rotation
   12. Demount workpiece and stress relieve off machine
   13. Gauge workpiece diameter and note any eccentricity
   14. Mark angular position of noted eccentricity
   15. Remount workpiece with mark at a particular position
   16. Enter eccentricity details into machine computer
   17. Adjust wheelfeed programme for eccentricity
   18. Rotate workpiece about primary axis
   19. Grind workpiece using adjusted wheelfeed programme
   20. Measure wheelhead advance
   21. Stop wheelfeed when final advance achieved
   22. Retract wheel
   23. Stop workpiece rotation
   24. Demount workpiece
   25. More similar workpieces? - Yes or No
   26. If Yes, go to 27. If No, go to 29
   27. Mount new workpiece
   28. Go to 17
   29. END
3. Set up routine for a computer controlled grinding machine for grinding a workpiece having two or more regions to be concentrically ground, and subsequent grinding of similar workpieces
   1. Load workpiece data into machine computer
   2. Load wheelfeed programme for workpiece regions
   3. Enter target wheel advances for regions
   4. Mount workpiece
   5. Select a region near centre of workpiece to grind
   6. Rotate workpiece about primary axis for grinding
   7. Align grinding wheel with region to be ground
   8. Initiate wheelfeed and advance wheel to engage region
   9. Grind workpiece and measure wheelhead advance
   10. Stop wheelfeed at desired wheel advance
   11. Disengage wheel and workpiece
   12. Engage diameter measuring gauge on ground region
   13. Rotate workpiece slowly
   14. Gauge ground diameter and store diameter measurements
   15. Identify any eccentricity and its rotational position
   16. Adjust regions wheelfeed programme for eccentricity
   17. Identify positions of other regions to be ground
   18. Compute adjusted wheelfeed programme for each other region
   19. Rotate workpiece to grind
   20. Advance wheel to engage workpiece region
   21. Enter target wheel advance for region
   22. Grind using adjusted wheelfeed programme for region
   23. Measure wheel advance
   24. Stop wheelfeed at required wheel advance
   25. Retract wheel
   26. More regions to be ground? - Yes or No
   27. If Yes, go to 28. If No, go to 30
   28. Select next region
   29. Go to 19
   30. Stop workpiece rotation
   31. Demount workpiece
   32. More workpieces? - Yes or No
   33. If Yes, go to 34. If No, go to 36
   34. Mount next workpiece
   35. Go to 19
   36. END
4. Alternative set-up routine for a computer controlled grinding machine for grinding a workpiece having two or more regions to be concentrically ground, and subsequent grinding of similar workpieces
   1. Load workpiece data into machine computer
   2. Load wheelfeed programme for workpiece regions
   3. Enter target wheel advances for the regions
   4. Mount workpiece
   5. Select region to grind
   6. Rotate workpiece about primary axis for grinding
   7. Align grinding wheel with region to be ground
   8. Initiate programme to deliver wheelfeed control signals
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify any eccentricity and its rotational position
   17. Adjust region's wheelfeed programme for eccentricity
   18. More regions to be ground? - Yes or No
   19. If Yes, go to 5; If No, go to 20
   20. Select region to regrind
   21. Rotate workpiece about primary axis for grinding
   22. Enter target wheel advance for region
   23. Align grinding wheel with region to be ground
   24. Initiate adjusted wheelfeed programme for region
   25. Advance wheel to engage region
   26. Grind region and measure wheel advance
   27. Stop wheelfeed at desired wheel advance and retract
   28. More regions to regrind? Yes or No
   29. If Yes, go to 20; If No, go to 30
   30. Stop workpiece rotation
   31. Demount workpiece
   32. More workpieces? - Yes or No
   33. If Yes, go to 34. If No, go to 36
   34. Mount next workpiece
   35. Go to 20
   36. END
5. Set-up routine for a computer controlled grinding machine for grinding of workpieces having two or more regions which are to be concentrically ground, in which the machine parameters are set up by repeatedly grinding a first workpiece or a series of workpieces until the gauged results from each grinding are within pre-set limits and for subsequent grinding of similar workpieces using the machine as set up
   1. Load workpiece data in machine computer
   2. Load wheelfeed programme for workpiece regions
   3. Enter target wheel advances for the regions
   4. Mount workpiece
   5. Select region to grind
   6. Rotate workpiece about primary axis for grinding
   7. Align grinding wheel with region to be ground
   8. Initiate programme to delivery wheelfeed for the region
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify and store eccentricity magnitude and position
   17. Adjust region's wheelfeed programme for eccentricity
   18. More regions to be ground? Yes or No
   19. If Yes, go to 4; if No, go to 20
   20. Advance wheel to engage workpiece region
   21. Grind workpiece using adjusted wheelfeed for engaged region
   22. Measure wheel advance
   23. Stop wheelfeed when required advance achieved
   24. Disengage wheel
   25. Rotate workpiece slowly
   26. Gauge diameter and store region's diameter value
   27. Identify any eccentricity and its rotational position
   28. Store magnitude and position of region's eccentricity
   29. Compare with previously stored values for region
   30. Compute differences between two sets of values
   31. Compare size of differences with predetermined limits
   32. Store comparison results for region
   33. More regions to be ground? Yes or No
   34. If Yes, go to 35; if No, go to 37
   35. Align wheel with region to be ground
   36. Go to 20
   37. Read stored comparison results
   38. If all results favourable, go to 39; if not, go to 20
   39. Preserve final adjusted wheelfeed programme values
   40. Demount workpiece
   41. End of Set-up. Begin grinding? Yes or No
   42. If Yes, go to 43; if No, go to 53
   43. Mount workpiece
   44. Align wheel with region to be ground
   45 Advance and grind using final adjusted wheelfeed programme values
   46. Measure wheel advance
   47. Stop wheelfeed at desired advance
   48. Retract wheel
   49. Stop workpiece rotation
   50. Demount workpiece
   51. More workpieces? Yes or No
   52. If Yes, go to 43; if No, go to 53
   53. Enter STANDBY MODE
6. Set-up routine for a computer controlled grinding machine for grinding workpieces having two or more regions to be concentrically ground in which the wheelfeed and other parameters required for grinding are computed as the mean of a purality of values derived by a sequence of measurements on a plurality of test workpieces, and subsequent grinding of similar workpieces using the machine as set up
   1. Load workpiece data in machine computer
   2. Load wheelfeed programme for workpiece regions
   3. Enter target wheel advances for the regions
   4. Mount workpiece and reset counter to zero
   5. Select region to grind
   6. Rotate workpiece about primary axis for grinding
   7. Align grinding wheel with region to be ground
   8. Initiate programme to delivery wheelfeed for the region
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify and store eccentricity magnitude and position
   17. More regions to be ground? Yes or No
   18. If Yes, go to 5; if No, go to 19
   19. Increment workpiece counter by one
   20. Demount workpiece
   21. More workpieces to be checked? Yes or No
   22. If Yes, go to 4; if No, go to 23
   23. Compute arithmetic mean of adjusted wheelfeed control signals for each region using counter value
   24. Store mean wheelfeed signals for each region in place of originally loaded wheelfeed programme
   25. Store final wheel advances for the regions in place of data entered in step 3
   26. End of set up. Begin grinding? Yes or No
   27. If Yes, go to 28; if No, go to 43
   28. Mount workpiece
   29. Select region to grind
   30. Rotate workpiece about primary axis for grinding
   31. Align grinding wheel with region to be ground
   32. Advance wheel to engage region
   33. Control wheelfeed using mean wheelfeed signals for region
   34. Grind workpiece and measure wheel advance
   35. Stop wheelfeed at desired wheel advance
   36. Disengage wheel and workpiece
   37. More regions to grind? Yes or No
   38. If Yes, go to 29; if No, go to 39
   39. Demount workpiece
   40. More workpieces? Yes or No
   41. If Yes, go to 28; if No go to 42
   42. END
   43. Enter STANDBY MODE

## Claims

1. A method of operating a computer controlled grinding machine to grind a region of a workpiece, whereby the finished workpiece should have a cylindrical ground surface region which is concentric relative to the workpiece primary axis, said method comprising the step of eccentrically grinding the said region of the workpiece, the degree of eccentricity imparted being such that, when the ground workpiece is stress relieved after grinding, the ground surface region will be concentric relative to the said primary axis.

2. A method of grinding cylindrical surfaces of a crankshaft, whereby the said cylindrical ground surfaces of the finished crankshaft should be concentric relative to their axes, said method comprising the steps of:
- using a software controlled crankpin following facility incorporated into a computer controlled grinding machine to enable a grinding wheel to follow the relatively excessive eccentric movement of a crankpin during grinding as the crankshaft rotates, and
- eccentrically grinding the cylindrical surfaces of the crankshaft, the degree of eccentricity imparted being such that, when the ground crankshaft is stress relieved after grinding, the ground cylindrical surfaces will be concentric relative to their axes.

3. A computer controlled grinding machine (10) adapted for performing the methods claimed in claim 1 or claim 2, comprising; a grinding wheel(12), drive means(14) for rotating the wheel, wheelfeed drive means(22) for advancing and withdrawing the grinding wheel towards and away from a workpiece(18) region in a precise manner, computer means(32) for controlling the wheelfeed drive means, which computer means includes first memory means for storing programmable wheelfeed instructions whereby the position of the wheel at each instant during a grinding process can be controlled, program means loaded into the computer to control advance and withdrawal and position of the grinding wheel, and second memory means for storing correction signals for adjusting the original wheelfeed instructions or control signals derived therefrom during the grinding of said regions, or storing said corrected wheelfeed program instructions or control signals.

4. A machine as claimed in claim 3 when programmed to operate a grinding process which will reduce unwanted eccentricity introduced by grinding process forces into what should be a concentric cylindrical workpiece region, by grinding each such region so as to be complementarily eccentric to any eccentricity which would be introduced by grinding process forces.

5. A machine as claimed in claim 3 or claim 4 in which the grinding wheel(12) is to be moved axially relative to the workpiece, or the workpiece(18) is to be moved axially relative to the grinding wheel, to allow different regions to be ground, and wherein the computer means(32) includes additional program instructions to control the movement of the wheel or the workpiece to effect said relative positioning.

## Patentansprüche

1. Verfahren zum Betreiben einer rechnergesteuerten Schleifmaschine für das Schleifen eines Bereiches eines Werkstückes, bei dem das fertig bearbeitete Werkstück einen zylindrischen, geschliffenen Oberflächenbereich haben soll, der relativ zu der Hauptachse des Werkstückes konzentrisch verläuft, **dadurch gekennzeichnet, dass** dieser Bereich des Werkstückes exzentrisch geschliffen wird, dass der Grad der Exzentrizität, der aufgegeben wird, so beschaffen ist, dass dann, wenn das geschliffene Werkstück nach dem Schleifen spannungsentlastet ist, der geschliffene Oberflächenbereich in bezug auf die Hauptachse konzentrisch ist.

2. Verfahren zum Schleifen von zylindrischen Oberflächen einer Kurbelwelle, bei dem die zylindrischen, geschliffenen Oberflächen der fertig bearbeiteten Kurbelwelle konzentrisch relativ zu ihren Achsen sein sollen, **dadurch gekennzeichnet, dass**
eine Vorrichtung verwendet wird, die einem durch Software gesteuerten Kurbelzapfen folgt, und die in eine rechnergesteuerte Schleifmaschine eingebaut ist, um zu erreichen, dass eine Schleifscheibe der relativ weitgehenden exzentrischen Bewegung eines Kurbelzapfens während des Schleifens bei rotierender Kurbelwelle folgt, und
die zylindrischen Oberflächen der Kurbelwelle exzentrisch geschliffen werden, wobei das Ausmaß der Exzentrizität, das aufgegeben wird, so gewählt ist, dass dann, wenn die geschliffene Kurbelwelle nach dem Schleifen spannungsentlastet wird, die geschliffenen zylindrischen Oberflächen relativ zu ihren Achsen konzentrisch sind.

3. Rechnergesteuerte Schleifmaschine (10) zur Durchführung der Verfahren nach Anspruch 1 oder 2, **gekennzeichnet durch** eine Schleifscheibe (12), eine Antriebsvorrichtung (14) zum Drehen der Schleifscheibe, eine Antriebsvorrichtung (22) für den Schleifscheibenvorschub zum exakten Vorschieben und Zurückziehen der Schleifscheibe relativ zu einem Bereich eines Werkstückes (18), eine Rechnervorrichtung (32) zur Steuerung der Antriebsvorrichtung des Schleifscheibenvorschubs, die eine erste Speichervorrichtung zur Speicherung von programmierbaren Schleifscheibenvorschub-Instruktionen aufweist, **durch** die die Position der Schleifscheibe in jedem Augenblick während eines Schleifvorgangs gesteuert werden kann, eine Programmvorrichtung, die in den Rechner geladen wird, um das Vorschieben und Zurückziehen sowie das Positionieren der Schleifscheibe zu steuern, und eine zweite Speichervorrichtung zum Speichern von Korrektursignalen für die Einstellung der originalen Schleifscheibenvorschub-Instruktionen oder von Steuersignalen, die daraus während des Schleifens der genannten Bereiche abgeleitet werden, oder zum Speichern der korrigierten Scheibenvorschub-Programminstruktionen oder Steuersignale.

4. Maschine nach Anspruch 3, die zur Durchführung eines Schleifvorganges programmiert ist, mit dem eine unerwünschte Exzentrizität reduziert wird, die durch die beim Schleifvorgang auftretenden Kräfte in einen vermeintlich konzentrischen zylindrischen Werkstückbereich eingeführt wird, wobei jeder solche Bereich so geschliffen wird, dass er komplementär exzentrisch in bezug auf jede Exzentrizität ist, die durch die beim Schleifvorgang auftretenden Kräfte eingeführt würde.

5. Maschine nach Anspruch 3 oder 4, bei der die Schleifscheibe (12) in axialer Richtung relativ zum Werkstück oder aber das Werkstück (18) in axialer Richtung relativ zur Schleifscheibe bewegt wird, um das Schleifen unterschiedlicher Bereiche zu ermöglichen, und bei der die Rechnervorrichtung (32) zusätzliche Programminstruktionen aufweist, um die Verschiebung der Schleifscheibe oder des Werkstückes zur Erzielung der relativen Positionierung zu steuern.

## Revendications

1. Procédé de fonctionnement d'une rectifieuse commandée par ordinateur pour rectifier une région d'une pièce, par lequel la pièce finie devra présenter une région de surface rectifiée cylindrique qui est concentrique par rapport à l'axe primaire de la pièce, ledit procédé comprenant l'étape de rectification excentrique de ladite région de la pièce, le degré d'excentricité conféré étant tel que, lorsque la pièce rectifiée est libérée de toute contrainte après la rectification, la région de surface rectifiée sera concentrique par rapport audit axe primaire.

2. Procédé de rectification de surfaces cylindriques d'un vilebrequin, par lequel lesdites surfaces rectifiées cylindriques du vilebrequin fini devront être concentriques par rapport à leurs axes, ledit procédé comprenant les étapes suivantes :
- utilisation d'un équipement suivant un maneton et contrôlé par un logiciel, incorporé dans une rectifieuse commandée par ordinateur afin de permettre à un disque de rectification de suivre le mouvement excentrique relativement excessif d'un maneton pendant la rectification lorsque le vilebrequin tourne, et
- rectification excentrique des surfaces cylindriques du vilebrequin, le degré d'excentricité conféré étant tel que, lorsque le vilebrequin rectifié est libéré de toute contrainte après la rectification, les surfaces cylindriques rectifiées seront concentriques par rapport à leurs axes.

3. Rectifieuse commandée par ordinateur (10) apte à mettre en oeuvre les procédés revendiqués dans la revendication 1 ou la revendication 2, comprenant : un disque de rectification (12), des moyens de commande (14) pour faire tourner le disque, des moyens de commande du disque (22) servant à faire avancer et reculer le disque de rectification en direction et à l'écart d'une région de pièce (18) d'une manière précise, des moyens d'ordinateur (32) servant à commander les moyens de commande du disque, lesdits moyens d'ordinateur comprenant des premiers moyens de mémoire destinés à stocker des instructions de commande du disque programmables permettant de commander la position du disque à chaque instant durant un processus de rectification, des moyens de programme chargés dans l'ordinateur afin de commander l'avance et le retrait et la position du disque de rectification, et des seconds moyens de mémoire destinés à stocker des signaux de correction visant à ajuster les instructions originales de commande du disque ou des signaux de commande originaux dérivés de celles-ci durant la rectification desdites régions, ou à stocker lesdites instructions de programme de commande du disque corrigées ou lesdits signaux de contrôle corrigés.

4. Machine conformément à la revendication 3 lorsqu'elle est programmée pour exécuter un procédé de rectification qui réduira l'excentricité indésirable introduite par des forces du processus de rectification dans ce qui devrait être une région de pièce cylindrique concentrique, par la rectification de chaque région de ce type de manière à être excentrique de façon complémentaire à toute excentricité qui pourrait être introduite par les forces du processus de rectification.

5. Machine conformément à la revendication 3 ou à la revendication 4, dans laquelle le disque de rectification (12) doit être déplacé axialement par rapport à la pièce, ou la pièce (18) doit être déplacée axialement par rapport au disque de rectification, permettant ainsi de rectifier des régions différentes, et dans laquelle les moyens d'ordinateur (32) comprennent des instructions de programme supplémentaires ayant pour but de commander le mouvement du disque ou de la pièce en vue d'effectuer ledit positionnement relatif.
